# FASCICULE DE BREVET EUROPEEN

(11) **EP 2 765 309 B1**
(45) Date de publication et mention de la délivrance du brevet: **18.11.2015**
(21) Numéro de dépôt: 14154790.1
(22) Date de dépôt: 12.02.2014
(51) Int. Cl.: F04B 1/06, B60K 17/356, F04B 49/00, F03C 1/40, F03C 1/08, F16H 61/448

(54) **Machine hydraulique double améliorée avec valve de distribution, et système d'entrainement comprenant une telle machine hydraulique**
Verbesserte doppelte hydraulische Maschine mit Verteilerventil, und Fahrantriebvorrichtung mit solch einer hydraulischen Maschine
Improved double hydraulic machine comprising a distribution valve, and a drive system incorporating such a hydraulic machine

(30) Priorité: 12.02.2013 FR 1351180
(43) Date de publication de la demande: 13.08.2014
(73) Titulaire: Poclain Hydraulics Industrie, 60410 Verberie (FR)
(72) Inventeur: Houillon, Pierre-Louis, 60410 Verberie (FR); Lemaire, Gilles, 60410 Verberie (FR)
(74) Mandataire: Regimbeau

(56) Documents cités:
- EP-A1- 0 547 947
- EP-A1- 1 026 025
- FR-A1- 2 719 001
- US-B1- 6 269 901

## Description

### DOMAINE TECHNIQUE GENERAL

La présente invention concerne le domaine des machines hydrauliques et les systèmes d'entrainement de véhicules au moyen de telles machines hydrauliques.

### ETAT DE L'ART

On connait les systèmes hydrauliques utilisant des machines hydrauliques doubles à deux cylindrées de fonctionnement, permettant notamment de réaliser une fonction anti patinage sur un véhicule en liant deux machines élémentaires d'une machine hydraulique double à une ligne série commune.

Les machines hydrauliques doubles connues comprennent un ensemble de pistons divisés en deux sous-ensembles formant ainsi deux machines hydrauliques élémentaires, ces deux machines hydrauliques élémentaires ayant un premier orifice en commun (admission ou refoulement selon le sens de fonctionnement), et un second orifice distinct (refoulement ou admission respectivement selon le sens de fonctionnement). Une machine hydraulique double ayant les caractéristiques techniques définis dans le préambule de la revendication 1 est connue par le document US 6,269,901 B1.

De tels systèmes sont commercialisées sous la marque déposée TwinLock par la demanderesse.

Ces systèmes permettent notamment d'obtenir deux vitesses distinctes en modifiant la cylindrée des machines hydrauliques doubles, en court-circuitant l'une des machines élémentaires.

Dans le cas de véhicules à trois roues, de tels systèmes ne permettent toutefois pas d'obtenir ces deux vitesses distinctes à la fois en marche avant et en marche arrière du véhicule sans aboutir à un blocage des machines hydrauliques.

On note que dans l'ensemble du présent texte, on désignera par machine hydraulique une machine pouvant fonctionner en tant que moteur ou que pompe hydraulique. Une machine hydraulique comprend de manière conventionnelle une pluralité de pistons disposés dans des logements, et effectuant des mouvements de va et vient au contact d'une came multilobes. De manière générale, un moteur hydraulique est réversible, et peut également présenter un fonctionnement de pompe si on lui applique un couple d'entrée. A l'inverse, une pompe peut fonctionner en moteur si on applique une pression à son admission. Les appellations moteur ou pompe dans le présent texte désignent ainsi un mode de fonctionnement particulier des différentes machines hydrauliques, qui demeurent réversibles si elles sont disposées dans un système approprié.

### PRESENTATION DE L'INVENTION

La présente invention vise à proposer une machine hydraulique permettant de répondre à cette problématique, ainsi que le système d'entrainement mettant en oeuvre une telle machine hydraulique.

A cet effet, la présente invention propose une machine hydraulique double à deux cylindrées de fonctionnement, comprenant un carter, un distributeur, un bloc cylindres muni d'une pluralité de pistons disposés en vis-à-vis d'une came,
ladite pluralité de pistons formant deux sous-ensembles disjoints définissant ainsi une première et une seconde machine hydraulique élémentaire alimentées sélectivement par le distributeur présentant chacune un premier orifice et un second orifice aménagés dans le distributeur,

la machine hydraulique double présentant trois orifices adaptés pour être reliés au premier orifice et au second orifice des machines hydrauliques élémentaires,
caractérisée en ce qu'elle comprend en outre une valve de distribution reliant lesdits trois orifices de la machine hydraulique au distributeur, ladite valve de distribution pouvant alterner entre deux configurations et étant configurée pour,
- dans une première configuration, relier le second orifice de la première machine élémentaire et de la seconde machine élémentaire à un premier orifice de la machine hydraulique double, et relier le premier orifice de la première machine élémentaire à un troisième orifice de la machine hydraulique double et le premier orifice de la seconde machine élémentaire de la machine hydraulique double à un second orifice de la machine hydraulique double, et
- dans une seconde configuration, relier le second orifice de la première machine élémentaire au premier orifice de la machine hydraulique double, et relier le premier orifice de la première machine élémentaire ainsi que le premier et le second orifice de la seconde machine élémentaire à la fois au deuxième orifice et au troisième orifice de la machine hydraulique double.

Selon un mode de réalisation particulier,
- le distributeur, le carter et la came de la machine hydraulique sont montés fixe en rotation,
- le bloc cylindres est monté tournant,
- le distributeur comprend une glace et un couvercle de glace, ladite valve de distribution étant montée coulissante dans ledit couvercle de glace.

L'invention concerne également un système d'entrainement d'organes de déplacement d'un véhicule, comprenant :
- une pompe hydraulique présentant un premier orifice et un second orifice,
- un premier moteur hydraulique double à deux cylindrées de fonctionnement entrainant en rotation un premier organe de déplacement du véhicule, ledit premier moteur hydraulique double comprenant deux moteurs élémentaires présentant chacun un premier et un second orifice,
- un deuxième et un troisième moteurs hydrauliques entrainant chacun un organe de déplacement du véhicule et présentant chacun un premier et un second orifice,
   dans lequel
- le premier orifice de la pompe hydraulique est relié au premier orifice de chacun des deuxième et troisième moteurs hydrauliques,
- le second orifice du deuxième moteur hydraulique est relié au premier orifice du premier moteur élémentaire du premier moteur hydraulique,
- le second orifice du troisième moteur hydraulique est relié au premier orifice du second moteur élémentaire du premier moteur hydraulique, caractérisé en ce que ledit système est configuré de manière à
dans une première configuration, relier le second orifice du premier moteur élémentaire et le second orifice du second moteur élémentaire du premier moteur hydraulique au second orifice de la pompe hydraulique, et
dans une seconde configuration, relier le second orifice du premier moteur élémentaire du premier moteur hydraulique au second orifice de la pompe, et le second orifice du second moteur élémentaire du premier moteur hydraulique au premier orifice du premier moteur élémentaire du premier moteur hydraulique et au premier orifice du second moteur élémentaire du premier moteur hydraulique.

Selon un mode de réalisation particulier, le deuxième moteur est un moteur hydraulique double à deux cylindrées de fonctionnement, comprenant deux moteurs élémentaires présentant chacun un premier et un second orifice, lesdits seconds orifices étant reliés l'un à l'autre, le deuxième moteur comprenant en outre un distributeur adapté pour,
- dans une première configuration, relier le premier orifice du premier moteur élémentaire et le premier orifice du second moteur élémentaire au premier orifice du deuxième moteur hydraulique, et relier le second orifice du premier moteur élémentaire et le second orifice du second moteur élémentaire au second orifice du deuxième moteur hydraulique ; et
- dans une seconde configuration, relier le premier orifice du premier moteur élémentaire au premier orifice du deuxième moteur hydraulique, et relier le second orifice du premier moteur élémentaire, le premier orifice du second moteur élémentaire et le second orifice du second moteur élémentaire au second orifice du deuxième moteur hydraulique.

Selon un mode de réalisation particulier, le troisième moteur est un moteur hydraulique double à deux cylindrées de fonctionnement, comprenant deux moteurs élémentaires présentant chacun un premier et un second orifice, lesdits seconds orifices étant reliés l'un à l'autre, le troisième moteur comprenant en outre un distributeur adapté pour,
- dans une première configuration, relier le premier orifice du premier moteur élémentaire et le premier orifice du second moteur élémentaire au premier orifice du troisième moteur hydraulique, et relier le second orifice du premier moteur élémentaire et le second orifice du second moteur élémentaire au second orifice du troisième moteur hydraulique ; et
- dans une seconde configuration, relier le premier orifice du premier moteur élémentaire au premier orifice du troisième moteur hydraulique, et relier le second orifice du premier moteur élémentaire, le premier orifice du second moteur élémentaire et le second orifice du second moteur élémentaire au second orifice du troisième moteur hydraulique.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 et 2 présentent un exemple de machine hydraulique selon un aspect de l'invention dans deux configurations ;
- Les figures 3 et 4 présentent un exemple de système d'entrainement de véhicule selon un aspect de l'invention dans deux configurations.

Sur l'ensemble des figures, les éléments en commun sont repérés par des références numériques identiques.

### DESCRIPTION DETAILLEE

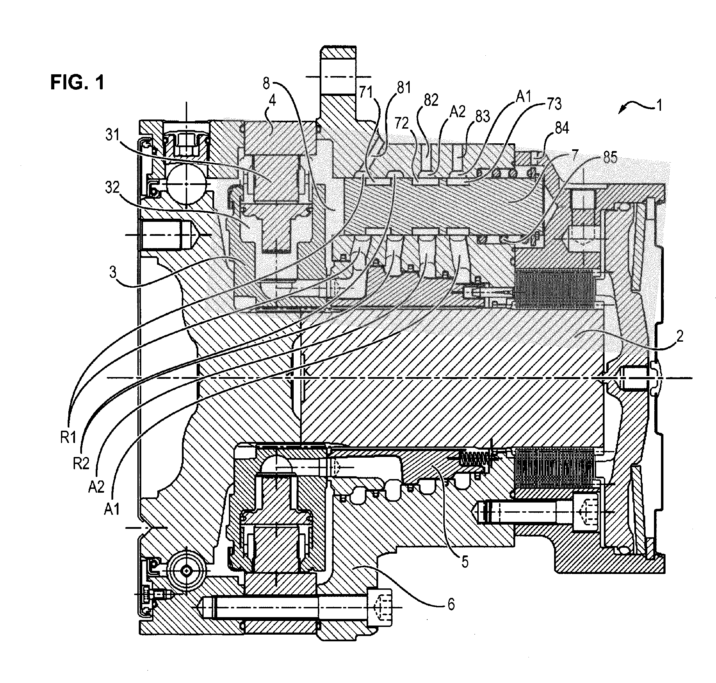

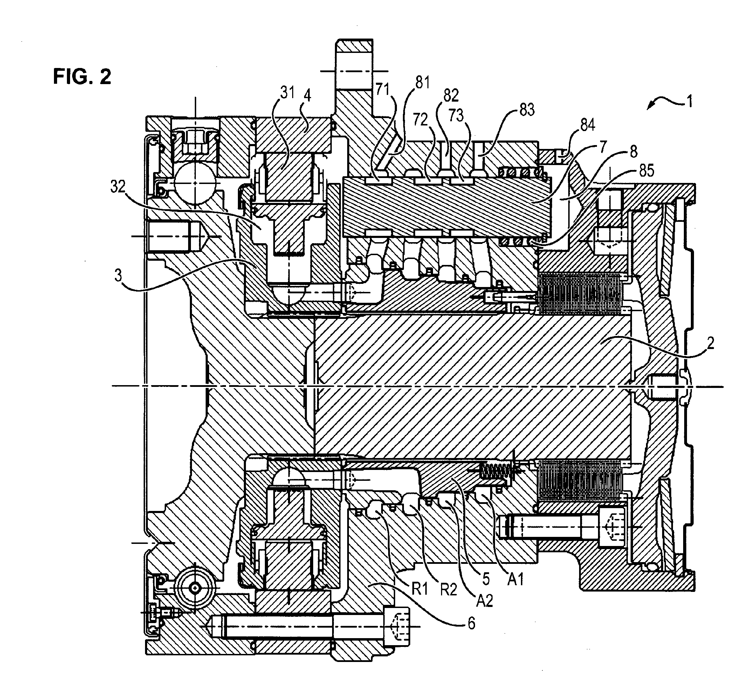

Les figures 1 et 2 présentent un exemple de machine hydraulique 1 selon un aspect de l'invention dans deux configurations ;

On repère sur ces deux figures une machine hydraulique 1, comprenant :
- un arbre 2,
- un bloc cylindres 3,
- une came multilobes 4,
- un distributeur comprenant une glace 5 et un couvercle de glace 6,
- une valve de distribution 7.

La machine hydraulique 1 est une machine hydraulique double à deux cylindrées de fonctionnement. Elle comprend une pluralité de pistons 31 disposés dans des logements 32 du bloc cylindres en vis-à-vis de la came 4, ces pistons 31 formant deux sous-ensembles disjoints définissant ainsi une première et une seconde machines hydrauliques élémentaires que l'on désigne respectivement M1 et M2, alimentées sélectivement par le distributeur.

La glace 5 du distributeur comprend ainsi des conduits définissant pour chacune de ces machines hydrauliques élémentaires M1 et M2 une admission et un refoulement correspondant à des conduits aménagés dans la glace 5 du distributeur.

En considérant un fonctionnement de la machine hydraulique dans un sens donné, on repère ainsi quatre conduits aménagés dans la glace 5 du distributeur :
- Un conduit R1 correspondant au refoulement de la machine élémentaire M1,
- Un conduit R2 correspondant au refoulement de la machine élémentaire M2,
- Un conduit A2 correspondant à l'admission de la machine élémentaire M2,
- Un conduit A1 correspondant à l'admission de la machine élémentaire M1.

Ces conduits A1, A2, R1 et R2 sont également aménagés dans le couvercle de glace 6, et sont reliés à trois orifices débouchant de la machine hydraulique 1, que l'on désigne respectivement par 81, 82 et 83, pouvant être reliés à un circuit hydraulique par exemple au moyen de flexibles.

La valve de distribution 7 est disposée dans le couvercle de glace 6, dans un logement 8 dans lequel débouchent les conduits A1, A2, R1 et R2.
La valve de distribution 7 est disposée de manière à permettre de relier sélectivement les conduits A1, A2, R1 et R2 aux orifices 81, 82 et 83.

Dans le mode de réalisation représenté, la valve de distribution comprend trois gorges respectivement 71, 72 et 73 aménagées sur sa périphérie, ces gorges permettant chacune de relier un ou plusieurs conduits A1, A2, R1 et R2 à un ou plusieurs orifices 81, 82 et 83.

La valve de distribution 7 est montée coulissante dans le logement 8, et alterne entre deux configurations C1 et C2 sous l'application d'une pression vis un orifice de commande 84 à laquelle s'oppose un ressort 85 réalisant une fonction de moyen de rappel élastique.

La configuration C1 est représentée sur la figure 1, et la configuration C2 est représentée sur la figure 2.

Dans sa configuration C1, la valve de distribution 7 relie :
- Les conduits R1 et R2 à l'orifice 81 via la gorge 71 ;
- Le conduit A2 à l'orifice 82 via la gorge 72,
- Le conduit A1 à l'orifice 83 via la gorge 73.

Dans sa configuration C2, la valve de distribution 7 relie :
- Le conduit R1 à l'orifice 81 via la gorge 71 ;
- Les conduits R2, A2 et A1 aux orifices 82 et 83 via les gorges 72 et 73.

En considérant un sens de fonctionnement donné de la machine hydraulique 1, la configuration C1 permet ainsi d'alimenter les deux machines hydrauliques élémentaires M1 et M2 de manière à ce qu'elles présentent chacune un fonctionnement en moteur, l'alimentation étant réalisée via les orifices 82 et 83 et le refoulement étant commun via l'orifice 81.

En configuration C2, la machine élémentaire M2 est en configuration de roue libre. En effet, son admission A2 et son refoulement R2 sont reliés l'un à l'autre, et cette machine élémentaire M2 est donc à cylindrée nulle.
La machine élémentaire M1 présente quant à elle toujours un fonctionnement de moteur, son admission étant reliée aux orifices 82 et 83, et son refoulement à l'orifice 81.

En considérant un fonctionnement de la machine hydraulique 1 en sens inverse, les alimentations et refoulement des machines élémentaires M1 et M2 sont inversées par rapport à ce que l'on a décrit précédemment. Ainsi, en fonctionnement inverse, l'orifice 81 est un orifice d'admission, et les orifices 82 et 83 sont des orifices de refoulement.

Par conséquent, en configuration C1 en fonctionnement inverse, les deux machines élémentaires M1 et M2 sont alimentées par l'orifice 81, respectivement via les conduits R1 et R2 qui forment leur admission. Les conduits A1 et A2 forment le refoulement respectivement de la machine élémentaire M1 et de la machine élémentaire M2.
On a donc deux machines élémentaires M1 et M2 alimentées par une admission commune, et présentant deux refoulements distincts.

En configuration C2 en fonctionnement inverse, la machine élémentaire M1 est alimentée via l'orifice 81 relié au conduit R1 qui forme son admission, tandis que son refoulement A1 est relié à l'admission R2 et au refoulement A2 de la machine élémentaire M2, ces trois conduits A1, A2 et R2 étant reliés aux deux orifices 82 et 83.
La machine élémentaire M2 est donc à cylindrée nulle, tandis que la machine élémentaire M1 présente un fonctionnement de moteur.

La structure de machine hydraulique présentée permet ainsi de réaliser une variation de cylindrée en court-circuitant ou en réalisant ce que l'on dénomme communément un « bypass » de l'une des machines élémentaires, dans l'un ou l'autre des sens de fonctionnement de la machine hydraulique correspondant typiquement à un entrainement en marche avant ou en marche arrière d'un véhicule.

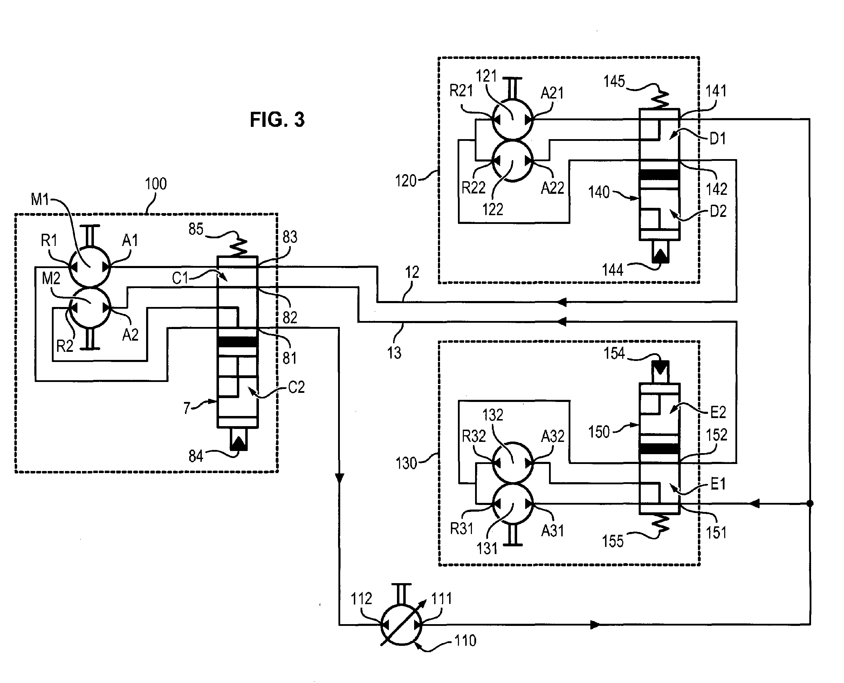

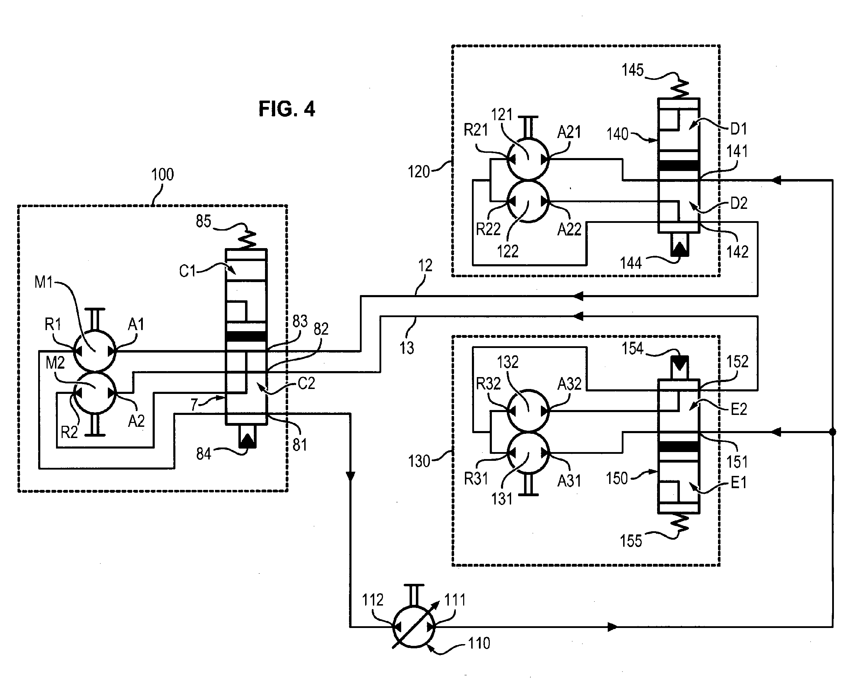

Les figures 3 et 4 présentent un exemple de système d'entrainement de véhicule selon un aspect de l'invention dans deux configurations.

Le système tel que présenté comprend un moteur hydraulique 100 typiquement identique à la machine hydraulique 100 présentée précédemment en référence aux figures 1 et 2, une pompe hydraulique 110, un moteur gauche 120 et un moteur droit 130.

La pompe hydraulique 110 est typiquement réversible et à cylindrée variable, présentant un refoulement 111 et une admission 112.

On repère sur les figures 3 et 4 les différents éléments composant le moteur hydraulique 100 décrit précédemment.

La valve de distribution 7 peut être intégrée au moteur hydraulique 100 comme décrit précédemment, ou être un composant distinct.

Les moteurs gauche 120 et droit 130 sont des moteurs hydrauliques doubles, présentant chacun deux cylindrées de fonctionnement selon une structure de moteur hydraulique double bien connue de l'Homme du métier, comprenant une admission et un refoulement qui sont chacun reliés sélectivement à l'admission et au refoulement de deux moteurs élémentaires constituant le moteur hydraulique double.

Le moteur hydraulique 100 ainsi que les moteurs gauche 120 et droit 130 sont chacun liés à un axe d'entrainement distinct d'un véhicule

Le moteur gauche 120 comprend ainsi deux moteurs élémentaires 121 et 122, présentant chacun une admission et un refoulement ; on désigne ainsi respectivement par A21 et R21 l'admission et le refoulement du moteur élémentaire 121, et par A22 et R22 l'admission et le refoulement du moteur élémentaire 122.
Comme représenté sur les figures 3 et 4, les refoulements R21 et R22 des moteurs élémentaires 121 et 122 sont communes.
Un distributeur gauche 140 est configuré de manière à relier l'admission et le refoulement des moteurs élémentaires 121 et 122 à un premier et un second orifices 141 et 142, correspondant à l'admission et au refoulement du moteur gauche 120.
Le distributeur gauche 140 est piloté par une commande 144 à laquelle s'oppose un ressort de rappel 145, de manière à alterner entre deux configurations :
- Une première configuration D1 dans laquelle le premier orifice 141 et relié aux admissions A21 et A22 des deux moteurs élémentaires 121 et 122, tandis que les refoulements R21 et R22 sont reliés au second orifice 142 du moteur gauche 140.
- Une seconde configuration D2 dans laquelle le premier orifice 141 et relié à l'admission A21 du moteur élémentaire 121, tandis que les refoulements R21 et R22 des deux moteurs élémentaires 121 et 122 ainsi que l'admission A22 du moteur élémentaire 122 sont reliés au second orifice 142 du moteur gauche 120.

De la même manière, le moteur droit 130 comprend ainsi deux moteurs élémentaires 131 et 132, présentant chacun une admission et un refoulement ; on désigne ainsi respectivement par A31 et R31 l'admission et le refoulement du moteur élémentaire 131, et par A32 et R32 l'admission et le refoulement du moteur élémentaire 132.
Comme représenté sur les figures 3 et 4, les refoulements R31 et R32 des moteurs élémentaires 131 et 132 sont communes.
Un distributeur droit 150 est configuré de manière à relier l'admission et le refoulement des moteurs élémentaires 131 et 132 à un premier et un second orifices 151 et 152, correspondant à l'admission et au refoulement du moteur droit 130.
Le distributeur droit 150 est piloté par une commande 154 à laquelle s'oppose un ressort de rappel 155, de manière à alterner entre deux configurations :
- Une première configuration E1 dans laquelle le premier orifice 151 et relié aux admissions A31 et A32 des deux moteurs élémentaires 131 et 132, tandis que les refoulements R31 et R32 sont reliés au second orifice 152 du moteur gauche 150.
- Une seconde configuration E2 dans laquelle le premier orifice 151 et relié à l'admission A31 du moteur élémentaire 131, tandis que les refoulements R31 et R32 des deux moteurs élémentaires 131 et 132 ainsi que l'admission A32 du moteur élémentaire 132 sont reliés au second orifice 152 du moteur gauche 130.

Le distributeur gauche 140 et le distributeur droit 150 sont typiquement intégrés respectivement dans le moteur gauche 120 et dans le moteur droit 130, ou sont des éléments distincts de ces moteurs 120 et 130.

On décrit désormais le fonctionnement du système ainsi représenté en considérant le sens de circulation représenté par les flèches sur la figure 3 que l'on qualifiera de marche avant.
On considère dans un premier temps la configuration présentée sur la figure 3, dans laquelle les distributeurs gauche 140 et droit 150 sont dans leurs premières configurations respectives D1 et E1, et dans laquelle la valve de distribution 7 est dans sa première configuration C1.

La pompe 110 délivre un débit de fluide par son refoulement 111, qui alimente les moteurs gauche 120 et droit 130 via leurs premiers orifices, respectivement 141 et 151.
Les distributeurs droit 140 et gauche 150 dirigent le fluide vers les admissions de chacun des moteurs élémentaires des moteurs gauche 120 et droit 130.
Le fluide est ensuite refoulé par les moteurs élémentaires, et via les seconds orifices 142 et 152 du moteur gauche 120 et du moteur droit 130.

Le fluide passe ensuite par une ligne intermédiaire gauche 12 reliant le second orifice 142 du moteur gauche 120 au troisième orifice 83 du moteur hydraulique 100, et par une ligne intermédiaire droite 13, reliant le second orifice 152 du moteur droit 130 au deuxième orifice 82 du moteur hydraulique 100.

La valve de distribution 7 achemine ensuite le fluide de la ligne intermédiaire gauche 12 vers l'admission A1 de la première machine élémentaire M1 du moteur hydraulique 100, et le fluide de la ligne intermédiaire droite 13 vers l'admission A2 de la seconde machine élémentaire M2 du moteur hydraulique 100.

Les deux machines élémentaires M1 et M2 refoulent ensuite le fluide par leurs refoulements respectifs R1 et R2, qui sont reliés au premier orifice 81 du moteur hydraulique 100, lui-même relié à l'admission 112 de la pompe hydraulique 110.

On obtient ainsi un fonctionnement similaire au système connu sous la marque déposée TwinLock, permettant de réaliser une fonction anti-patinage en reliant par des lignes série, en l'occurrence les lignes intermédiaires 12 et 13, les moteurs élémentaires de différents d'axe d'entrainement d'un véhicule. Les moteurs 100, 120 et 130 sont utilisés à leur cylindrée maximale, tous les moteurs élémentaires les constituant étant utilisés.

La figure 4 représente le système présenté sur la figure 3 dans une seconde configuration, dans laquelle les distributeurs gauche 140 et droit 150 sont dans leurs secondes configurations respectives D2 et E2, et dans laquelle la valve de distribution 7 est dans sa seconde configuration C2.

Le sens de déplacement du fluide est identique à celui indiqué sur la figure 3.

La pompe 110 débite du fluide par son refoulement 111, et alimente les moteurs gauche 120 et droit 130 par leurs premiers orifices, respectivement 141 et 151. Un unique moteur élémentaire du moteur droit 130 et du moteur gauche 120, respectivement 131 et 121 est alors en service, les second moteurs élémentaires 122 et 132 étant à cylindrée nulle du fait de la configuration des distributeurs 140 et 150 qui relie leur admission à leur refoulement. Les deux moteurs 120 et 130 fonctionnent ainsi à cylindrée réduite.

Le moteur gauche 120 et le moteur droit 130 refoulent le fluide par leurs seconds orifices respectifs 142 et 152, qui est acheminé par les lignes intermédiaires gauche 12 et droite 13 respectivement au troisième orifice 83 et au deuxième orifice 82 du moteur hydraulique 100.

La première machine élémentaire M1 du moteur hydraulique 100 est ainsi alimentée en pression par les orifices 82 et 83 du moteur hydraulique 100, et refoule du fluide par son refoulement R1. La seconde machine élémentaire M2 du moteur hydraulique 100 est quant à elle à cylindrée nulle, son admission A2 et son refoulement R2 étant à la même pression du fait de la configuration C2 dans laquelle est la valve de distribution 7.

Le moteur hydraulique 100 refoule ensuite le fluide par son premier orifice 81, vers l'admission 112 de la pompe 110.

Cette configuration permet ainsi de réduire la cylindrée des moteurs hydrauliques 100, 120 et 130 en mettant à cylindrée nulle l'un des moteurs élémentaires constituant chacun de ces moteurs 100, 120 et 130.

La configuration du système représenté implique que les moteurs élémentaires M2, 122 et 132 qui sont mis à cylindrée nulle ont chacun leur admission et leur refoulement relié à une ligne du circuit hydraulique qui n'est pas reliée directement au refoulement de la pompe hydraulique 110, ce qui permet d'éviter un blocage des différents moteurs 100, 120 et 130 qui surviendrait si l'on devait relier l'admission et le refoulement d'un moteur élémentaire directement au refoulement 111 de la pompe hydraulique 110 sans qu'aucun appareil hydraulique ne soit interposé.

Pour un sens de déplacement donné, on définit ainsi deux vitesses de déplacement d'un véhicule équipé d'un tel système, correspondant respectivement aux configurations présentées sur les figures 3 et 4.

On considère désormais un fonctionnement inverse du système représenté, que l'on désignera par la suite comme fonctionnement en marche arrière.

On se réfère à nouveau à la figure 3 pour illustrer ce fonctionnement inverse.

La pompe 110 débit du fluide par son orifice 112, qui alimente le moteur hydraulique 100 via son premier orifice 81. La valve de distribution 7 relie ce premier orifice 81 aux deux machines élémentaires M1 et M2 qui sont ainsi alimentées, et qui refoulent ensuite le fluide, respectivement vers le troisième orifice 83 pour la machine élémentaire M1, et vers le deuxième orifice 82 pour la machine élémentaire M2.

Le fluide est ensuite acheminé via les lignes intermédiaires 12 et 13 respectivement vers le moteur gauche 120 et le moteur droit 130, et les alimente via leurs seconds orifices, respectivement 142 et 152. Le fluide entrant par ces orifices 142 et 152 alimente ainsi les moteurs élémentaires 121, 122, 131 et 132 du moteur gauche 120 et du moteur droit 130, qui refoulent ensuite le fluide par les premier orifices 141 et 151 respectivement du moteur gauche 120 et du moteur droit 130. Le fluide est ensuite acheminé vers l'orifice 111 de la pompe 110.

De la même manière que pour le fonctionnement en marche avant décrit précédemment, on obtient ainsi un fonctionnement en marche arrière réalisant une fonction d'anti-patinage comme précédemment, selon une première vitesse de fonctionnement dans laquelle tous les moteurs 100, 120 et 130 sont à pleine cylindrée.

On considère enfin un fonctionnement en marche arrière avec le système dans la configuration présentée sur la figure 4.

La pompe 110 débit du fluide par son orifice 112, qui alimente le moteur hydraulique 100 via son premier orifice 81. La valve de distribution 7 relie ce premier orifice 81 à la machine élémentaire M1 afin de l'alimenter, cette dernière refoulant le fluide par les deux orifices 82 et 83 du moteur hydraulique 100. Ces deux orifices 82 et 83 sont reliés respectivement à la ligne intermédiaire gauche 12 et à la ligne intermédiaire droite 13, ainsi qu'à l'admission et au refoulement de la machine élémentaire M2.
La machine élémentaire M2 a quant à elle son admission et son refoulement reliés tous deux aux orifices 82 et 83 du moteur hydraulique 100. La machine élémentaire M2 est donc à cylindrée nulle.

Le fluide est ensuite acheminé via les lignes intermédiaires 12 et 13 respectivement vers le moteur gauche 120 et le moteur droit 130, et les alimente via leurs seconds orifices, respectivement 142 et 152. Le fluide entrant par ces orifices 142 et 152 alimente ainsi les moteurs élémentaires 121 et 131 du moteur gauche 120 et du moteur droit 130, qui refoulent ensuite le fluide par les premier orifices 141 et 151 respectivement du moteur gauche 120 et du moteur droit 130.
Les moteurs élémentaires 122 et 132 sont pour leur part à cylindrée nulle, leur admission et leur refoulement sont chacun reliés à un orifice commun et sont donc à la même pression.

Le fluide est ensuite acheminé vers l'orifice 111 de la pompe 110.

On obtient ainsi une seconde vitesse de fonctionnement en marche arrière, avec une cylindrée réduite pour chacun des moteurs 100, 120 et 130.

De la même manière que précédemment, la configuration du système représenté implique que les moteurs élémentaires M2, 122 et 132 qui sont mis à cylindrée nulle ont chacun leur admission et leur refoulement relié à une ligne du circuit hydraulique qui n'est pas reliée directement au refoulement de la pompe hydraulique 110, ce qui permet d'éviter un blocage des différents moteurs 100, 120 et 130 qui surviendrait si l'on devait relier l'admission et le refoulement d'un moteur élémentaire directement au refoulement de la pompe hydraulique 110 sans qu'aucun appareil hydraulique ne soit interposé.

Le système tel que proposé permet ainsi d'obtenir
- deux vitesses de fonctionnement en marche avant, l'une des deux vitesses réalisant une fonction d'anti-patinage, et
- deux vitesses de fonctionnement en marche arrière, l'une des deux vitesses réalisant une fonction d'anti-patinage.
La configuration du système permet de réaliser ces deux vitesses de fonctionnement pour la marche avant et pour la marche arrière en évitant un blocage de tout ou partie des moteurs hydrauliques tel qu'on le rencontre dans les systèmes connus.

Le système exploite ainsi avantageusement la structure de machine hydraulique présentée précédemment en référence aux figures 1 et 2 pour la réalisation d'un système d'entrainement d'un véhicule.

Le système présenté s'applique par exemple à un compacteur comprenant un rouleau à l'avant du véhicule, qui est entrainé par le premier moteur 100, et deux roues motrices à l'arrière du véhicule, entrainées par le moteur gauche 120 et le moteur droit 130.

Le compacteur présente ainsi une vitesse de travail et une vitesse de route en marche avant et également une vitesse de travail et une vitesse de route en marche arrière.

## Revendications

1. Machine hydraulique double (100) à deux cylindrées de fonctionnement, comprenant un carter, un distributeur (5, 6), un bloc cylindres (3) muni d'une pluralité de pistons (31) disposés en vis-à-vis d'une came (4),
ladite pluralité de pistons (31) formant deux sous-ensembles disjoints définissant ainsi une première (M1) et une seconde (M2) machine hydraulique élémentaire alimentées sélectivement par le distributeur (5, 6) présentant chacune un premier orifice (A1, A2) et un second orifice (R1, R2) aménagés dans le distributeur (5, 6),
la machine hydraulique double (100) présentant trois orifices (81, 82, 83) adaptés pour être reliés au premier orifice (A1, A2) et au second orifice (R1, R2) des machines hydrauliques élémentaires (M1, M2), **caractérisée en ce qu'**elle comprend en outre une valve de distribution (7) reliant lesdits trois orifices (81, 82, 83) de la machine hydraulique (100) au distributeur (5, 6), ladite valve de distribution (7) pouvant alterner entre deux configurations (C1, C2) et étant configurée pour,
- dans une première configuration, relier le second orifice de la première machine élémentaire (M1) et de la seconde machine élémentaire (M2) à un premier orifice (81) de la machine hydraulique double (100), et relier le premier orifice (A1) de la première machine élémentaire (M1) à un troisième orifice (83) de la machine hydraulique double (100) et le premier orifice (A2) de la seconde machine élémentaire (M2) de la machine hydraulique double (100) à un second orifice (82) de la machine hydraulique double (100), et
- dans une seconde configuration, relier le second orifice (R1) de la première machine élémentaire (M1) au premier orifice (81) de la machine hydraulique double (100), et relier le premier orifice (A1) de la première machine élémentaire (M1) ainsi que le premier (A2) et le second (R2) orifice de la seconde machine élémentaire (M2) à la fois au deuxième orifice (82) et au troisième orifice (83) de la machine hydraulique double (100).

2. Machine hydraulique double (100) selon la revendication 1, dans laquelle
- le distributeur (5, 6), le carter et la came (4) de la machine hydraulique sont montés fixe en rotation,
- le bloc cylindres (3) est monté tournant,
- le distributeur (5, 6) comprend une glace (5) et un couvercle de glace (6), ladite valve de distribution (7) étant montée coulissante dans ledit couvercle de glace (6).

3. Système d'entrainement d'organes de déplacement d'un véhicule, comprenant :
- une pompe hydraulique (110) présentant un premier orifice (111) et un second orifice (112),
- un premier moteur hydraulique (100) double à deux cylindrées de fonctionnement selon l'une des revendications 1 ou 2 entrainant en rotation un premier organe de déplacement du véhicule,
- un deuxième (120) et un troisième (130) moteurs hydrauliques entrainant chacun un organe de déplacement du véhicule et présentant chacun un premier (141, 151) et un second (142, 152) orifice, dans lequel
- le premier orifice (111) de la pompe hydraulique (110) est relié au premier orifice (141, 151) de chacun des deuxième (120) et troisième (130) moteurs hydrauliques,
- le second orifice (142) du deuxième moteur hydraulique (120) est relié au premier orifice (A1) du premier moteur élémentaire (M1) du premier moteur hydraulique (100),
- le second orifice (152) du troisième moteur hydraulique (130) est relié au premier orifice (A2) du second moteur élémentaire (M2) du premier moteur hydraulique (100),
**caractérisé en ce que** ledit système est configuré de manière à dans une première configuration (C1), relier le second orifice (R1) du premier moteur élémentaire (M1) et le second orifice (R2) du second moteur élémentaire (M2) du premier moteur hydraulique au second orifice (112) de la pompe hydraulique (110), et
dans une seconde configuration (C2), relier le second orifice (R1) du premier moteur élémentaire (M1) du premier moteur hydraulique (100) au second orifice (112) de la pompe (110), et le second orifice (R2) du second moteur élémentaire (M2) du premier moteur hydraulique (100) au premier orifice (A1) du premier moteur élémentaire (M1) du premier moteur hydraulique (100) et au premier orifice (A2) du second moteur élémentaire (M2) du premier moteur hydraulique (100).

4. Système selon la revendication 3, dans lequel le deuxième moteur (120) est un moteur hydraulique double à deux cylindrées de fonctionnement, comprenant deux moteurs élémentaires (121, 122) présentant chacun un premier (A21, A22) et un second orifice (R21, R22), lesdits seconds orifices (R21, R22) étant reliés l'un à l'autre,
le deuxième moteur (120) comprenant en outre un distributeur (140) adapté pour,
- dans une première configuration (D1), relier le premier orifice (A21) du premier moteur élémentaire (121) et le premier orifice (A22) du second moteur élémentaire (122) au premier orifice (141) du deuxième moteur hydraulique (120), et relier le second orifice (R21) du premier moteur élémentaire (121) et le second orifice (R22) du second moteur élémentaire (122) au second orifice (142) du deuxième moteur hydraulique (120) ; et
- dans une seconde configuration (D2), relier le premier orifice (A21) du premier moteur élémentaire (121) au premier orifice (141) du deuxième moteur hydraulique (120), et relier le second orifice (R21) du premier moteur élémentaire (121), le premier orifice (A22) du second moteur élémentaire (122) et le second orifice (R22) du second moteur élémentaire (122) au second orifice (142) du deuxième moteur hydraulique (120).

5. Système selon l'une des revendications 3 ou 4, dans lequel le troisième moteur (130) est un moteur hydraulique double à deux cylindrées de fonctionnement, comprenant deux moteurs élémentaires (131, 132) présentant chacun un premier (A31, A32) et un second orifice (R31, R32), lesdits seconds orifices (R31, R32) étant reliés l'un à l'autre,
le troisième moteur (130) comprenant en outre un distributeur (150) adapté pour,
- dans une première configuration (E1), relier le premier orifice (A31) du premier moteur élémentaire (131) et le premier orifice (A32) du second moteur élémentaire (132) au premier orifice (151) du troisième moteur hydraulique (130), et relier le second orifice (R31) du premier moteur élémentaire (131) et le second orifice (R32) du second moteur élémentaire (132) au second orifice (152) du troisième moteur hydraulique (130) ; et
- dans une seconde configuration (E2), relier le premier orifice (A31) du premier moteur élémentaire (131) au premier orifice (151) du troisième moteur hydraulique (130), et relier le second orifice (R31) du premier moteur élémentaire (131), le premier orifice (A32) du second moteur élémentaire (132) et le second orifice (R32) du second moteur élémentaire (132) au second orifice (152) du troisième moteur hydraulique (130).

## Patentansprüche

1. Doppelte hydraulische Maschine (100) mit zwei Betriebshubräumen, die ein Gehäuse, einen Verteiler (5, 6) und einen Zylinderblock (3) umfasst, der mit mehreren Kolben (31) versehen ist, die gegenüber einem Nocken (4) angeordnet sind,
wobei die mehreren Kolben (31) zwei getrennte Unterbaugruppen bilden, die so eine erste (M1) und eine zweite (M2) hydraulische Einzelmaschine bilden, die selektiv durch den Verteiler (5, 6) versorgt werden und jeweils eine erste Öffnung (A1, A2) und eine zweite Öffnung (R1, R2) aufweisen, die in dem Verteiler (5, 6) eingerichtet sind,
wobei die doppelte hydraulische Maschine (100) drei Öffnungen (81, 82, 83) aufweist, die angepasst sind, um mit der ersten Öffnung (A1, A2) und mit der zweiten Öffnung (R1, R2) der hydraulischen Einzelmaschinen (M1, M2) verbunden zu sein,
**dadurch gekennzeichnet, dass** sie ferner ein Verteilerventil (7) umfasst, das die drei Öffnungen (81, 82, 83) der hydraulischen Maschine (100) mit dem Verteiler (5, 6) verbindet, wobei das Verteilerventil (7) zwischen zwei Ausgestaltungen (C1, C2) wechseln kann und ausgestaltet ist, um
- in einer ersten Ausgestaltung die zweite Öffnung der ersten Einzelmaschine (M1) und der zweiten Einzelmaschine (M2) mit einer ersten Öffnung (81) der doppelten hydraulischen Maschine (100) zu verbinden und die erste Öffnung (A1) der ersten Einzelmaschine (M1) mit einer dritten Öffnung (83) der doppelten hydraulischen Maschine (100) und die erste Öffnung (A2) der zweiten Einzelmaschine (M2) der doppelten hydraulischen Maschine (100) mit einer zweiten Öffnung (82) der doppelten hydraulischen Maschine (100) zu verbinden, und
- in einer zweiten Ausgestaltung die zweite Öffnung (R1) der ersten Einzelmaschine (M1) mit der ersten Öffnung (81) der doppelten hydraulischen Maschine (100) zu verbinden und die erste Öffnung (A1) der ersten Einzelmaschine (M1) sowie die erste (A2) und die zweite Öffnung (R2) der zweiten Einzelmaschine (M2) gleichzeitig mit der zweiten Öffnung (82) und der dritten Öffnung (83) der doppelten hydraulischen Maschine (100) zu verbinden.

2. Doppelte hydraulische Maschine (100) nach Anspruch 1, wobei
- der Verteiler (5, 6), das Gehäuse und der Nocken (4) der hydraulischen Maschine drehfest gelagert sind,
- der Zylinderblock (3) drehbar gelagert ist,
- der Verteiler (5, 6) eine Lauffläche (5) und eine Laufflächenabdeckung (6) umfasst, wobei das Verteilerventil (7) verschiebbar in der Laufflächenabdeckung (6) gelagert ist.

3. Antriebssystem für Fortbewegungsorgane eines Fahrzeugs, das Folgendes umfasst:
- eine hydraulische Pumpe (110), die eine erste Öffnung (111) und eine zweite Öffnung (112) aufweist,
- einen ersten doppelten Hydromotor (100) mit zwei Betriebshubräumen nach einem der Ansprüche 1 oder 2, der ein erstes Fortbewegungsorgan des Fahrzeugs drehbar antreibt,
- einen zweiten (120) und einen dritten (130) hydraulischen Motor, die jeweils ein Fortbewegungsorgan des Fahrzeugs antreiben und jeweils eine erste (141, 151) und eine zweite (142, 152) Öffnung aufweisen, wobei
- die erste Öffnung (111) der hydraulischen Pumpe (110) mit der ersten Öffnung (141, 151) von jedem von dem zweiten (120) und dem dritten (130) Hydromotor verbunden ist,
- die zweite Öffnung (142) des zweiten Hydromotors (120) mit der ersten Öffnung (A1) des ersten Einzelmotors (M1) des ersten Hydromotors (100) verbunden ist,
- die zweite Öffnung (152) des dritten Hydromotors (130) mit der ersten Öffnung (A2) des zweiten Einzelmotors (M2) des ersten Hydromotors (100) verbunden ist,
**dadurch gekennzeichnet, dass** das System derart ausgestaltet ist, dass in einer ersten Ausgestaltung (C1) die zweite Öffnung (R1) des ersten Einzelmotors (M1) und die zweite Öffnung (R2) des zweiten Einzelmotors (M2) des ersten Hydromotors mit der zweiten Öffnung (112) der hydraulischen Pumpe (110) verbunden ist, und
in einer zweiten Ausgestaltung (C2) die zweite Öffnung (R1) des ersten Einzelmotors (M1) des ersten Hydromotors (100) mit der zweiten Öffnung (112) der Pumpe (110) und die zweite Öffnung (R2) des zweiten Einzelmotors (M2) des ersten Hydromotors (100) mit der ersten Öffnung (A1) des ersten Einzelmotors (M1) des ersten Hydromotors (100) und mit der ersten Öffnung (A2) des zweiten Einzelmotors (M2) des ersten Hydromotors (100) verbunden ist.

4. System nach Anspruch 3, wobei der zweite Motor (120) ein doppelter Hydromotor mit zwei Betriebshubräumen ist, der zwei Einzelmotoren (121, 122) umfasst, die jeweils eine erste (A21, A22) und eine zweite Öffnung (R21, R22) umfassen, wobei die zweiten Öffnungen (R21, R22) miteinander verbunden sind,
der zweite Motor (120) ferner einen Verteiler (140) umfasst, der angepasst ist, um
- in einer ersten Ausgestaltung (D1) die erste Öffnung (A21) des ersten Einzelmotors (121) und die erste Öffnung (A22) des zweiten Einzelmotors (122) mit der ersten Öffnung (141) des zweiten Hydromotors (120) zu verbinden und die zweite Öffnung (R21) des ersten Einzelmotors (121) und die zweite Öffnung (R22) des zweiten Einzelmotors (122) mit der zweiten Öffnung (142) des zweiten Hydromotors (120) zu verbinden; und
- in einer zweiten Ausgestaltung (D2) die erste Öffnung (A21) des ersten Einzelmotors (121) mit der ersten Öffnung (141) des zweiten Hydromotors (120) zu verbinden und die zweite Öffnung (R21) des ersten Einzelmotors (121), die erste Öffnung (A22) des zweiten Einzelmotors (122) und die zweite Öffnung (R22) des zweiten Einzelmotors (122) mit der zweiten Öffnung (142) des zweiten Hydromotors (120) zu verbinden.

5. System nach einem der Ansprüche 3 oder 4, wobei der dritte Motor (130) ein doppelter Hydromotor mit zwei Betriebshubräumen ist, der zwei Einzelmotoren (131, 132) umfasst, die jeweils eine erste (A31, A32) und eine zweite Öffnung (R31, R32) umfassen, wobei die zweiten Öffnungen (R31, R32) miteinander verbunden sind,
wobei der dritte Motor (130) ferner einen Verteiler (150) umfasst, der angepasst ist, um
- in einer ersten Ausgestaltung (E1) die erste Öffnung (A31) des ersten Einzelmotors (131) und die erste Öffnung (A32) des zweiten Einzelmotors (132) mit der ersten Öffnung (151) des dritten Hydromotors (130) zu verbinden und die zweite Öffnung (R31) des ersten Einzelmotors (131) und die zweite Öffnung (R32) des zweiten Einzelmotors (132) mit der zweiten Öffnung (152) des dritten Hydromotors (130) zu verbinden; und
- in einer zweiten Ausgestaltung (E2) die erste Öffnung (A31) des ersten Einzelmotors (131) mit der ersten Öffnung (151) des dritten Hydromotors (130) zu verbinden und die zweite Öffnung (R31) des ersten Einzelmotors (131), die erste Öffnung (A32) des zweiten Einzelmotors (132) und die zweite Öffnung (R32) des zweiten Einzelmotors (132) mit der zweiten Öffnung (152) des dritten Hydromotors (130) zu verbinden.

## Claims

1. A double hydraulic machine (100) with two operating cylinder capacities, comprising a case, a distributor (5, 6), a cylinder block (3) provided with a plurality of pistons (31) positioned facing a cam (4), said plurality of pistons (31) forming two disconnected sub-assemblies thus defining a first (M1) and a second (M2) elementary hydraulic machine selectively fed by the distributor (5, 6) each having a first orifice (A1, A2) and a second orifice (R1, R2) made in the distributor (5, 6),
the double hydraulic machine (100) having three orifices (81, 82, 83) suitable for being connected to the first orifice (A1, A2) and to the second orifice (R1, R2) of the elementary hydraulic machines (M1, M2),
**characterized in that** it further comprises a distribution valve (7) connecting said three orifices (81, 82, 83) of the hydraulic machine (100) to the distributor (5, 6), said distribution valve (7) may alternate between two configurations (C1, C2) and is configured for,
- in a first configuration, connecting the second orifice of the first elementary machine (M1) and of the second elementary machine (M2) to a first orifice (81) of the double hydraulic machine (100), and connecting the first orifice (A1) of the first elementary machine (M1) to a third orifice (83) of the double hydraulic machine (100) and the first orifice (A2) of the second elementary machine (M2) of the double hydraulic machine (100) to a second orifice (82) of the double hydraulic machine (100), and
- in a second configuration, connecting the second orifice (R1) of the first elementary machine (M1) to the first orifice (81) of the double hydraulic machine (100), and connecting the first orifice (A1) of the first elementary machine (M1) as well as the first (A2) and the second (R2) orifice of the second elementary machine (M2) both to the second orifice (82) and to the third orifice (83) of the double hydraulic machine (100).

2. The double hydraulic machine (100) according to claim 1, wherein
- the distributor (5, 6), the case and the cam (4) of the hydraulic machine are fixedly mounted in rotation,
- the cylinder block (3) is rotatably mounted,
- the distributor (5, 6) comprises a valving (5) and a valving cover (6), said distribution valve (7) being slideably mounted in said valving cover (6).

3. A system for driving displacement units of a vehicle, comprising:
- a hydraulic pump (110) having a first orifice (111) and a second orifice (112),
- a first double hydraulic motor (100) with two operating cylinder capacities according to one of claims 1 or 2 driving into rotation a first displacement unit of the vehicle,
- a second (120) and a third (130) hydraulic motors each driving a displacement unit of the vehicle and each having a first (141, 151) and a second (142, 152) orifice,
wherein
- the first orifice (111) of the hydraulic pump (110) is connected to the first orifice (141, 151) of each of the second (120) and third (130) hydraulic motors,
- the second orifice (142) of the second hydraulic motor (120) is connected to the first orifice (A1) of the first elementary motor (M1) of the first hydraulic motor (100),
- the second orifice (152) of the third hydraulic motor (130) is connected to the first orifice (A2) of the second elementary motor (M2) of the first hydraulic motor (100),
**characterized in that** said system is configured so as to in a first configuration (C1), connect the second orifice (R1) of the first elementary motor (M1) and the second orifice (R2) of the second elementary motor (M2) of the first hydraulic motor to the second orifice (112) of the hydraulic pump (110), and
in a second configuration (C2), connect the second orifice (R1) of the first elementary motor (M1) of the first hydraulic motor (100) to the second orifice (112) of the pump (110) and the second orifice (R2) of the second elementary motor (M2) of the first hydraulic motor (100) to the first orifice (A1) of the first elementary motor (M1) of the first hydraulic motor (100) and to the first orifice (A2) of the second elementary motor (M2) of the first hydraulic motor (100).

4. The system according to claim 3, wherein the second motor (120) is a double hydraulic motor with two operating cylinder capacities, comprising two elementary motors (121, 122) each having a first (A21, A22) and a second orifice (R21, R22), said second orifices (R21, R22) being connected to each other,
the second motor (120) further comprising a distributor (140) suitable for,
- in a first configuration (D1), connecting the first orifice (A21) of the first elementary motor (121) and the first orifice (A22) of the second elementary motor (122) to the first orifice (141) of the second hydraulic motor (120), and connecting the second orifice (R21) of the first elementary motor (121) and the second orifice (R22) of the second elementary motor (122) to the second orifice (142) of the second hydraulic motor (120); and
- in a second configuration (D2), connecting the first orifice (A21) of the first elementary motor (121) to the first orifice (141) of the second hydraulic motor (120), and connecting the second orifice (R21) of the first elementary motor (121), the first orifice (A22) of the second elementary motor (122) and the second orifice (R22) of the second elementary motor (122) to the second orifice (142) of the second hydraulic motor (120).

5. The system according to one of claims 3 or 4, wherein the third motor (130) is a double hydraulic motor with two operating cylinder capacities, comprising two elementary motors (131, 132) each having a first (A31, A32) and a second orifice (R31, R32), said second orifices (R31, R32), being connected to each other,
the third motor (130) further comprising a distributor (150) suitable for,
- in a first configuration (E1), connecting the first orifice (A31) of the first elementary motor (131) and the first orifice (A32) of the second elementary motor (132) to the first orifice (151) of the third hydraulic motor (130), and connecting the second orifice (R31) of the first elementary motor (131) and the second orifice (R32) of the second elementary motor (132) to the second orifice (152) of the third hydraulic motor (130); and
- in a second configuration (E2), connecting the first orifice (A31) of the first elementary motor (131) to the first orifice (151) of the third hydraulic motor (130), and connecting the second orifice (R31) of the first elementary motor (131) the first orifice (A32) of the second elementary motor (132) and the second orifice (R32) of the second elementary motor (132) to the second orifice (152) of the third hydraulic motor (130).
